# DEMANDE DE BREVET EUROPEEN

(11) **EP 4 008 586 A1**
(43) Date de publication de la demande: **08.06.2022**
(21) Numéro de dépôt: 21204865.6
(22) Date de dépôt: 26.10.2021
(51) Int. Cl.: B60N 2/42, B60N 2/24, B60N 2/427

(54) **SIEGE DE VEHICULE PROTEGE CONTRE LES MINES TERRESTRES ET DESTINE A UN VEHICULE MILITAIRE**

(30) Priorité: 04.12.2020 FR 2012690
(71) Demandeur: SeatTec France, 67560 Rosheim (FR)
(72) Inventeur: BLASS Siegfried, Siegfried, 92289 URSENSOLLEN (DE)
(74) Mandataire: Merckling, Norbert

(57) **Abrégé**

La présente invention concerne un siège de véhicule (10) protégé contre les mines terrestres et destiné à un véhicule militaire, avec une partie de raccordement au mur (12) à fixer au niveau d'une région de véhicule au moins approximativement verticale, et avec une partie de raccordement au siège (14) fournie au niveau du siège de véhicule et mobile verticalement au niveau de la partie de raccordement au mur (12), dans lequel un élément de crémaillère (24) orienté dans sa direction verticale et réalisé avec respectivement une denture de verrouillage (28) au niveau de ses deux bords longitudinaux (26) mutuellement parallèles est fixé à la partie de raccordement au mur (12), une paire d'éléments de mâchoires (30), reliés les uns aux autres au moyen d'un élément formant ressort (32) précontraint mécaniquement et venant en prise de manière élastique avec complémentarité de forme et de force avec leur denture de contre-verrouillage (34) dans les dentures de verrouillage (26) de l'élément de crémaillère (24), sont montés simultanément mobiles et mutuellement parallèles avec une limitation de mouvement au niveau de la partie de raccordement au siège (14), et dans lequel un dispositif à ressort (36) avec un certain nombre d'éléments formant ressort de tension (38) précontraints mécaniquement est fourni entre la partie de raccordement au siège (14) et la partie de raccordement au mur (12).

## Description

### Domaine technique

La présente invention concerne un siège de véhicule protégé contre les mines terrestres et destiné à un véhicule militaire, avec une partie de raccordement au mur à fixer au niveau d'une région de véhicule au moins approximativement verticale, et avec une partie de raccordement au siège fournie au niveau du siège de véhicule et mobile verticalement au niveau de la partie de raccordement au mur.

### Technique antérieure

D'après le document DE 10 2018 008 659 A1 (au nom de SeatTec Sitztechnik GmbH), on connaît un siège de véhicule avec un châssis de base qui présente une paire de parties jambe espacées latéralement qui sont reliées l'une à l'autre au niveau de leurs sections d'extrémité antérieures au moyen d'un organe axial à partir duquel un dispositif formant palier et destiné à la plaque d'assise du siège de véhicule fait saillie en porte-à-faux vers l'arrière. Le dispositif formant palier est fourni de manière élastique au niveau de l'organe axial en vue d'une sollicitation mécanique du siège de véhicule allant jusqu'à une valeur d'accélération au moins approximativement perpendiculaire déterminée. La liaison entre les parties jambe et l'organe axial peut être déformée plastiquement en cas de sollicitation mécanique excédant ladite valeur d'accélération et forme un amortisseur de collision. Ce siège de véhicule connu est en particulier utilisé dans le cas de véhicules militaires qui se déplacent par exemple dans un champ de mines terrestres. Comme on le sait, le danger de rouler sur une mine terrestre est que cela entraine une explosion pouvant gravement blesser ou, dans un cas extrême, tuer un utilisateur du siège du véhicule militaire.

### Présentation de l'invention

La présente invention a pour but de créer un siège de véhicule protégé contre les mines terrestres, du type mentionné en préambule, qui convienne de manière optimale pour absorber des forces issues d'une explosion de mine, dans lequel l'utilisateur du siège de véhicule est protégé contre les forces explosives mettant sa vie en danger.

Le but de la présente invention est atteint grâce à un siège de véhicule protégé contre les mines terrestres et destiné à un véhicule militaire, avec une partie de raccordement au mur à fixer au niveau d'une région de véhicule au moins approximativement verticale, et avec une partie de raccordement au siège fournie au niveau du siège de véhicule et mobile verticalement au niveau de la partie de raccordement au mur, caractérisé en ce qu'un élément de crémaillère, orienté dans sa direction verticale et réalisé avec respectivement une denture de verrouillage au niveau de ses deux bords longitudinaux mutuellement parallèles, est fixé à la partie de raccordement au mur, en ce qu'une paire d'éléments de mâchoire, reliés ensemble au moyen d'un élément formant ressort précontraint mécaniquement, et dont la denture de contre-verrouillage vient en prise de manière élastique avec complémentarité de forme et de force dans les dentures de verrouillage de l'élément de crémaillère, sont montés mutuellement parallèles au niveau de la partie de raccordement au siège avec une limitation de mouvement, et en ce qu'un dispositif à ressort avec un certain nombre d'éléments formant ressort de tension précontraints mécaniquement est fourni entre la partie de raccordement au siège et la partie de raccordement au mur.

Dans l'état de fonctionnement normal du siège de véhicule selon la présente invention, les deux éléments de mâchoire opposés se trouvent au niveau de la section d'extrémité supérieure de l'élément de crémaillère, de sorte qu'en cas d'explosion de mine terrestre, ils s'encliquettent vers le bas le long de l'élément de crémaillère en raison de l'inertie en surmontant la force élastique du dispositif à ressort.

De manière préférée, les éléments formant ressort de tension sont ici précontraints mécaniquement de telle manière que la force élastique totale du dispositif à ressort correspond au moins approximativement à sa force élastique maximale et ce n'est qu'en cas d'explosion de mine que les verrouillages à denture entre les éléments de mâchoire et l'élément de crémaillère sont surmontés afin d'abaisser le siège de véhicule par rapport à la partie de raccordement au mur en raison de l'inertie, dans lequel les éléments de mâchoire s'encliquettent vers le bas le long de l'élément de crémaillère et, après la fin de l'explosion de mine, les éléments de mâchoire se verrouillent à nouveau avec l'élément de crémaillère par engagement mutuel avec complémentarité de forme et de force.

Il s'est révélé avantageux que les dents de la denture de verrouillage respective de l'élément de crémaillère soient orientées de manière inclinée obliquement vers le bas par rapport à sa direction longitudinale, et que les deux éléments de mâchoires soient réalisés avec respectivement une denture de contre-verrouillage de forme correspondante orientée de manière inclinée obliquement vers le haut.

Afin que les dentures des deux éléments de mâchoire se verrouillent à nouveau de manière fiable et élastique avec complémentarité de forme et de force dans les dentures de verrouillage au niveau des deux bords longitudinaux mutuellement parallèles de l'élément de crémaillère après la fin d'une explosion de mine, les éléments de mâchoire sont montés simultanément mobiles et mutuellement parallèles et comme il convient au niveau de la partie de raccordement du siège avec une limitation, respectivement au moyen d'une paire de leviers de liaison.

Dans le cas du siège de véhicule selon la présente invention, le dispositif à ressort présente de manière préférée respectivement une paire d'éléments formant ressort de tension à côté de l'élément de crémaillère. Tous les éléments formant ressort de tension présentent de manière préférée les mêmes propriétés d'élasticité, à savoir les mêmes forces élastiques ou constantes d'élasticité.

Dans le cas du siège de véhicule selon la présente invention, il est utile que la partie de raccordement au siège présente une paire de compartiments de réception espacés latéralement l'un de l'autre et permettant de recevoir une paire des éléments formant ressort de tension.

Une paire de culasses de ressort résistantes en torsion sont de manière préférée associées à la partie de raccordement au mur, dans lequel un élément d'écrou associé est fixé au centre de chaque culasse de ressort et une paire d'éléments formant ressort de tension sont fixés par leur extrémité de fixation supérieure sur la culasse de ressort respective, et une tige filetée axialement immobile vissée dans l'élément d'écrou associé s'étend à travers la culasse de ressort respective afin de permettre une mise en tension mécanique de la paire associée d'éléments formant ressort de tension. Si la tige filetée respective associée à la partie de raccordement au mur est tournée, la culasse de ressort associée protégée contre la rotation est déplacée vers le haut dans la direction verticale de la partie de raccordement au siège et les éléments formant ressort de tension associés sont mis en tension mécaniquement comme souhaité. Il est utile que la culasse de ressort respective soit fournie de manière à être réglable en hauteur, guidée et protégée contre la rotation au niveau de la partie de raccordement au siège.

Afin d'assurer une mobilité fiable de la partie de raccordement au siège par rapport à la partie de raccordement au mur fixée au véhicule en cas d'explosion de mine, il s'est révélé avantageux que la partie de raccordement au mur présente au niveau de ses deux sections de bord longitudinales respectivement une rainure de guidage destinée à des roulettes qui font saillie à partir des surfaces latérales longitudinales de la partie de raccordement au siège.

Afin de limiter de manière définie le mouvement de la partie de raccordement au siège par rapport à la partie de raccordement au mur en cas d'explosion, il est utile que la partie de raccordement au mur présente des éléments formant tampon de butée et que la partie de raccordement au siège présente des éléments formant tampon de contre-butée.

### Brève description des figures

D'autres pièces individuelles, caractéristiques et avantages résultent de la description ci-dessous d'un exemple de mode de réalisation du siège de véhicule protégé contre les mines terrestres et destiné à un véhicule militaire, selon la présente invention, représenté sur les figures, ou de ses composants individuels essentiels, dans lequel le siège à fixer à la partie de raccordement au siège n'est pas représenté avec plaque d'assise et dossier, figures dans lesquelles :
- La figure 1 montre les pièces individuelles essentielles d'un exemple de réalisation d'un siège de véhicule conforme à l'invention, dans une vue éclatée en perspective.
- La figure 2 montre une vue éclatée tridimensionnelle des pièces individuelles essentielles de la partie de raccordement au siège ainsi qu'une partie adaptatrice de la partie de raccordement au mur de la figure 1.
- La figure 3 montre les pièces individuelles selon les figures 1 et 2 à l'état assemblé de la partie de raccordement au siège avec la partie de raccordement au mur.

### Description détaillée de l'invention

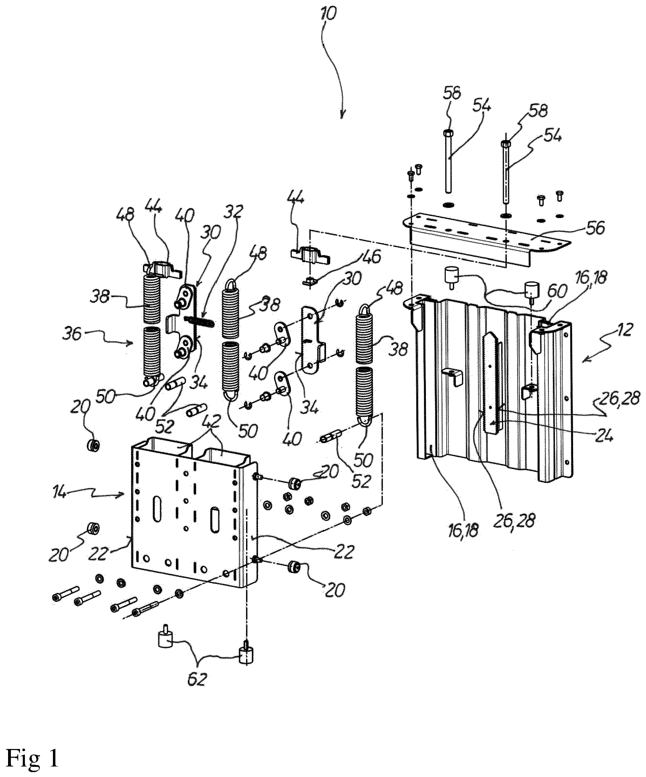

La figure 1 montre les pièces individuelles essentielles du siège de véhicule 10 protégé contre les mines terrestres avec une partie de raccordement au mur 12 et une partie de raccordement au siège 14. La partie de raccordement au mur 12 est destinée à être montée sur une partie structurelle au moins approximativement verticale d'un véhicule militaire. La partie de raccordement au siège 14 est utilisée pour assembler un siège de véhicule non représenté dans son intégralité, c'est-à-dire sa plaque d'assise et son dossier, et est prévu pour être mobile en hauteur au niveau de la partie de raccordement au mur 12. A cet effet, la partie de raccordement au mur 12 est réalisée, au niveau de ses deux sections de bord longitudinales 16 opposées, respectivement avec une rainure de guidage 18 destinée à des roulettes 20 qui font saillie à partir des surfaces latérales longitudinales 22 de la partie de raccordement au siège 14.

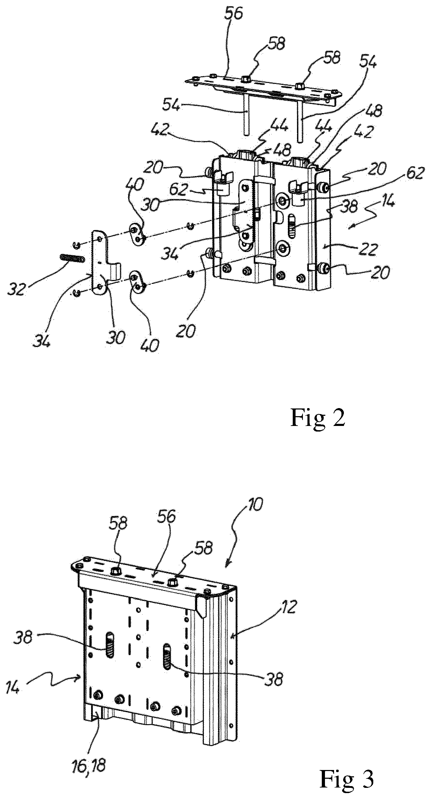

Un élément de crémaillère 24, réalisé avec respectivement une denture de verrouillage 28 sur chacun de ses deux bords longitudinaux 26 mutuellement parallèles, est fixé à la partie de raccordement au mur 12 en étant orienté verticalement. Sur la partie de raccordement au siège 14, une paire d'éléments de mâchoire 30 sont montés simultanément mobiles et mutuellement parallèles avec une limitation de mouvement, comme cela est par exemple également illustré sur la figure 2. Les deux éléments de mâchoires 30 sont reliés l'un à l'autre au moyen d'un élément formant ressort 32 précontraint mécaniquement. Les éléments de mâchoire 30 sont réalisés respectivement avec une denture de contre-verrouillage 34. Pendant le fonctionnement normal du véhicule militaire, les deux éléments de mâchoires 30 viennent en prise de manière élastique avec complémentarité de forme et de force dans les dentures de verrouillage 28 de l'élément de crémaillère 24.

Un dispositif à ressort 36 présentant un certain nombre d'éléments formant ressort de tension 38 précontraints mécaniquement, de manière préférée quatre éléments, est fourni entre la partie de raccordement au siège 14 et la partie de raccordement au mur 12. Sur la figure 1, trois des quatre éléments formant ressort de tension 38 sont représentés.

Les dents de la denture de verrouillage 28 respective de l'élément de crémaillère 24 sont orientées de manière inclinée obliquement vers le bas par rapport à sa direction longitudinale. Les deux éléments de mâchoire 30 sont respectivement réalisés avec une denture de contre-verrouillage 34 de forme correspondante avec des dents orientées obliquement vers le haut.

Afin que les deux éléments de mâchoire 30 soient mobiles parallèlement l'un à l'autre au niveau de la partie de raccordement au siège 14, ils sont respectivement montés sur la partie de raccordement au siège 14 au moyen d'une paire de leviers de liaison 40.

Comme cela a déjà été mentionné, le dispositif à ressort 36 présente entre la partie de raccordement au siège 14 et la partie de raccordement au mur 12 deux paires d'éléments formant ressort de tension 38 qui sont positionnées à côté de l'élément de crémaillère 24.

La partie de raccordement au siège 14 est réalisée avec deux compartiments de réception 42 espacés latéralement. Chaque compartiment de réception 42 sert à recevoir une paire d'éléments formant ressort de tension 38 du dispositif à ressort 36. A la partie de raccordement au mur 12 sont associées une paire de culasses de ressort 44 résistantes en torsion, qui sont fournies protégées contre la rotation et réglables verticalement dans les compartiments de réception 42. Un élément d'écrou 46 est fixé au centre de chaque culasse de ressort 44. Les culasses de ressort 44 associées à la partie de raccordement au mur 12 sont destinées à fixer les extrémités de fixation supérieures 48 des éléments formant ressort de tension 38. Les extrémités de fixation inférieures 50 des éléments formant ressort de tension 38 sont fixées à la partie de raccordement au siège 14 au moyen de boulons axiaux 52.

A travers la culasse de ressort 44 respective s'étend, en vue de la mise en tension mécanique de la paire associée d'éléments formant ressort de tension 38, une tige filetée 54 immobile axialement qui est vissée à travers l'élément d'écrou 46 associé. Les tiges filetées 54 s'étendent à travers une plaque adaptatrice 56 de la partie de raccordement au mur 12. Dans l'état assemblé des pièces individuelles décrites du siège de véhicule 10 selon la présente invention, les têtes de tige 58 font saillie à partir de la plaque adaptatrice 56 en restant librement accessibles, comme illustré sur la figure 3, de sorte que, à l'état assemblé de la partie de raccordement au siège 14 avec la partie de raccordement au mur 12, il est possible sans aucun problème d'utiliser un outil au niveau des têtes de tige 58 des tiges filetées 54, afin de mettre en tension de la manière souhaitée les éléments formant ressort de tension 38 du dispositif à ressort 36.

La partie de raccordement au mur 12 présente des éléments formant tampon de butée 60 et la partie de raccordement au siège 14 présente des éléments formant tampon de contre-butée 62 afin de limiter de manière définie le mouvement vers le bas, dû à l'inertie, de la partie de raccordement au siège 14 par rapport à la partie de raccordement au mur 12 en cas d'explosion de mine, dans lequel - comme cela a déjà été dit - pendant ledit mouvement vers le bas les dentures de contre-verrouillage 34 des éléments de mâchoire 30 s'encliquettent le long des dentures de verrouillage 28 de l'élément de crémaillère 24. Après la fin de l'action d'une explosion de mine, les dentures de contre-verrouillage 34 des éléments de mâchoire 30 se verrouillent à nouveau avec complémentarité de forme et de force dans les dentures de verrouillage 28 de l'élément de crémaillère 24, de sorte qu'un mouvement d'oscillation de la partie de raccordement au siège 14 au niveau de la partie de raccordement au mur 12 est empêché.

Des pièces individuelles identiques sont désignées sur l'ensemble des figures par des références numériques identiques, de sorte qu'il n'est pas nécessaire de décrire toutes les pièces individuelles en détail en relation avec les figures.

### Liste des références numériques

10 siège de véhicule
12 partie de raccordement au mur (destinée à 10)
14 partie de raccordement au siège (au niveau de 12 et destinée à 10)
16 sections de bord longitudinales (à partir de 12)
18 rainure de guidage (pour 16 et destinée à 20)
20 roulettes (à partir de 14 et au niveau de 22)
22 surfaces latérales longitudinales (à partir de 14)
24 élément de crémaillère (au niveau de 12)
26 bords longitudinaux (à partir de 24)
28 denture de verrouillage (au niveau de 26)
30 éléments de mâchoire (à partir de 14)
32 élément formant ressort (entre 30 et 30)
34 denture de contre-verrouillage (à partir de 30)
36 dispositif à ressort (entre 12 et 14)
38 éléments formant ressort de tension (à partir de 36)
40 levier de liaison (entre 30 et 14)
42 compartiments de réception (au niveau de 14 et destinés à 38)
44 culasses de ressort (au niveau de 12 et destinées à 38)
46 éléments d'écrou (pour 44)
48 extrémité de fixation supérieure (à partir de 38)
50 extrémité de fixation inférieure (à partir de 38)
52 boulons axiaux (destinés à 50 et au niveau de 14)
54 tiges filetées (pour 12)
56 plaque adaptatrice (à partir de 12)
58 tête de tige (à partir de 54)
60 éléments formant tampon de butée (au niveau de 12)
62 éléments formant tampon de contre-butée (au niveau de 14)

## Revendications

1. Siège de véhicule (10) protégé contre les mines terrestres et destiné à un véhicule militaire, avec une partie de raccordement au mur (12) à fixer au niveau d'une région de véhicule au moins approximativement verticale, et avec une partie de raccordement au siège (14) fournie au niveau du siège de véhicule et mobile verticalement au niveau de la partie de raccordement au mur (12), **caractérisé en ce que** un élément de crémaillère (24), orienté dans sa direction verticale et réalisé avec respectivement une denture de verrouillage (28) au niveau de ses deux bords longitudinaux (26) mutuellement parallèles, est fixé à la partie de raccordement au mur (12), **en ce qu'**une paire d'éléments de mâchoire (30), reliés ensemble au moyen d'un élément formant ressort (32) précontraint mécaniquement, et dont la denture de contre-verrouillage (34) vient en prise de manière élastique avec complémentarité de forme et de force dans les dentures de verrouillage (26) de l'élément de crémaillère (24), sont montés mutuellement parallèles au niveau de la partie de raccordement au siège (14) avec une limitation de mouvement, et **en ce qu'**un dispositif à ressort (36) avec un certain nombre d'éléments formant ressort de tension (38) précontraints mécaniquement est fourni entre la partie de raccordement au siège (14) et la partie de raccordement au mur (12),

2. Siège de véhicule selon la revendication 1, **caractérisé en ce que** les éléments formant ressort de tension (38) sont précontraints mécaniquement de telle manière que la force élastique totale du dispositif à ressort (36) correspond au moins approximativement à sa force élastique maximale et, en cas d'explosion de mine, les verrouillages à denture (34, 28) entre les éléments de mâchoire (30) et l'élément de crémaillère (24) sont surmontés afin d'abaisser le siège de véhicule par rapport à la partie de raccordement au mur (12) en raison de l'inertie, dans lequel les éléments de mâchoire (30) s'encliquettent vers le bas le long de l'élément de crémaillère (24) et les éléments de mâchoire (30) se verrouillent à nouveau avec l'élément de crémaillère (24) avec complémentarité de forme et de force après la fin de l'explosion de la mine.

3. Siège de véhicule selon la revendication 1 ou 2, **caractérisé en ce que** les dents de la denture de verrouillage (28) de l'élément de crémaillère (24) sont orientées de manière inclinée obliquement vers le bas par rapport à sa direction longitudinale, et **en ce que** les deux éléments de mâchoire (30) sont respectivement réalisés avec une denture de contre-verrouillage (34) de forme correspondante orientée de manière inclinée obliquement vers le haut.

4. Siège de véhicule selon l'une quelconque des revendications 1 à 3, **caractérisé en ce que** les éléments de mâchoire (30) sont montés mobiles parallèlement l'un à l'autre au niveau de la partie de raccordement au siège (14) avec une limitation de mouvement, respectivement au moyen d'une paire de leviers de liaison (40).

5. Siège de véhicule selon la revendication 1 ou 2, **caractérisé en ce que** le dispositif à ressort (36) présente respectivement une paire d'éléments formant ressort de tension (38) à côté de l'élément de crémaillère (24).

6. Siège de véhicule selon la revendication 5, **caractérisé en ce que** la partie de raccordement au siège (14) présente une paire de compartiments de réception (42) espacés latéralement l'un de l'autre et permettant de recevoir respectivement une paire d'éléments formant ressort de tension (38).

7. Siège de véhicule selon la revendication 1, **caractérisé en ce que** une paire de culasses de ressort (44) résistantes en torsion sont associées à la partie de raccordement au mur (12), dans lequel un élément d'écrou (46) associé est fixé au centre de chaque culasse de ressort (44), et les éléments formant ressort de tension (38) associés sont fixés sur la culasse de ressort (44) respective par une extrémité de fixation (48), et **en ce qu'**une tige filetée (54) axialement immobile vissée dans l'élément d'écrou (46) associé s'étend à travers la culasse de ressort (44) afin de mettre en tension mécaniquement la paire associée d'éléments formant ressort de tension (38).

8. Siège de véhicule selon les revendications 7 et 6, **caractérisé en ce que** la culasse de ressort (44) respective est fournie dans un compartiment de réception (42) de la partie de raccordement au siège (14) de manière à être réglable en hauteur en étant empêchée de tourner.

9. Siège de véhicule selon l'une quelconque des revendications précédentes, **caractérisé en ce que** la partie de raccordement au mur (12) présente au niveau de ses deux sections de bord longitudinales (16) respectivement une rainure de guidage (18) destinée à des roulettes (20) qui font saillie à partir des surfaces latérales longitudinales (22) de la partie de raccordement au siège (14).

10. Siège de véhicule selon l'une quelconque des revendications précédentes, **caractérisé en ce que** la partie de raccordement au mur (12) présente des éléments formant tampon de butée (60) et la partie de raccordement au siège (14) présente des éléments formant tampon de contre-butée (62).
